Europäisches Patentamt

European Patent Office

Office européen des brevets

(11) Numéro de publication: **0 463 264 A1**

## DEMANDE DE BREVET EUROPEEN

(21) Numéro de dépôt: **90401793.6**

(22) Date de dépôt: **25.06.90**

(51) Int. Cl.5: **B64F 1/34**, F02G 5/02

(43) Date de publication de la demande:
**02.01.92 Bulletin 92/01**

(84) Etats contractants désignés:
**DE GB SE**

(71) Demandeur: **MANUTENTION AUTOMATISMES SERVITUDES "MASER",S.A.R.L.**
**152 bis avenue Gabriel Péri**
**F-93400 Saint-Ouen(FR)**

(72) Inventeur: **La désignation de l'inventeur n'a pas encore été déposée**

(74) Mandataire: **Hammond, William et al**
**Cabinet CORRE & HAMMOND 17 rue Pasteur**
**F-92300 Levallois(FR)**

(54) **Appareil de servitude, en particulier pour aéronefs.**

(57) Appareil de servitude comprenant notamment un moteur thermique (1), entraînant un alternateur (2), lequel appareil est caractérisé par le fait que ledit moteur thermique (1) comporte un circuit de refroidissement (4) comprenant un échangeur de chaleur (5) entre un liquide de refroidissement et un flux d'air et que ledit appareil comporte sur le même châssis, un dispositif distributeur d'air comprenant un conduit (8) pour ledit flux d'air dont une extrémité est constituée par l'échangeur de chaleur (5) et comporte un ventilateur (6), et qui comprend une chambre (9) munie de moyens de chauffage précédant des moyens pour orienter le flux d'air issu de ladite chambre de chauffage (9). Application comme appareil de servitude pour aéronefs.

Fig. 1

La présente invention est relative à un nouveau typé d'appareil de servitude, en particulier pour aéronefs. Ces appareils qui sont utilisés quand les aéronefs sont immobilisés, leur fournissant l'énergie électrique nécessaire à l'alimentation des instruments, à l'éclairage et/ou du démarrage des moteurs, sans que cela soit exhaustif.

De tels appareils de servitude, généralement dénommés servants, comprennent un châssis monté sur roues afin d'en permettre un déplacement aisé. Sur ce châssis sont notamment disposés un moteur thermique, un alternateur entraîné par ce dernier et des prises de courant correspondant au type de courant à délivrer. En fait de telles servantes sont des groupes électrogènes évitant de mettre en oeuvre les moteurs de l'aéronef pour fournir l'énergie.

Depuis quelques années, il est apparu nécessaire de maintenir une certaine température à l'intérieur des aéronefs. Jusqu'à maintenant ceci était réalisé par des dispositifs embarqués alimentés en énergie électrique à partir des servantes.

Mais ces dispositifs de l'art antérieur font appel aux appareils présents à bord des aéronefs, ce qui peut présenter des inconvénients dans certains cas.

Aussi la présente invention a-t-elle notamment pour but de fournir un appareil de servitude permettant de ne pas faire appel aux dispositifs embarqués tant pour la fourniture de courant que pour le maintien d'un degré thermique à l'intérieur d'un aéronef.

Un autre but est de fournir un tel appareil qui puisse répondre aux normes d'encombrement tout en ayant un coût de réalisation faible.

Ces buts ainsi que d'autres qui apparaîtront par la suite, sont atteints par un appareil de servitude, notamment pour aéronef, comprenant notamment un moteur thermique, refroidi par un liquide de refroidissement, un alternateur entraîné par ce moteur fournissant un courant électrique délivré à une ou plusieurs prises , lequel appareil est caractérisé par le fait que le moteur thermique comporte un circuit de refroidissement comprenant un échangeur de chaleur entre le liquide de refroidissement et un flux d'air et que ledit appareil comporte, disposé sur le même châssis, un dispositif distributeur d'air comprenant un conduit pour ce flux d'air dont une extrémité est constituée par l'échangeur de chaleur et comporte un ventilateur, et qui comprend une chambre munie de moyens de chauffage précédant des moyens pour orienter le flux d'air issu de cette chambre.

Avantageusement, le ventilateur est entraîné par un moteur électrique alimenté en énergie à partir de l'alternateur. Les moyens de chauffage prévus dans la chambre sont constitués par des résistances alimentées en énergie électrique à partir de l'alternateur. De préférence, le circuit d'alimentation électrique de ces résistances comporte un dispositif de contrôle afin que l'énergie électrique reste maximum aux prises.

Selon un mode de réalisation de l'invention, le conduit pour le flux d'air est en un matériau souple au-delà des moyens pour orienter le flux d'air issu de la chambre de chauffage. Ces moyens sont constitués par des volets permettant de diriger le flux d'air en partie ou en totalité vers l' aéronef.

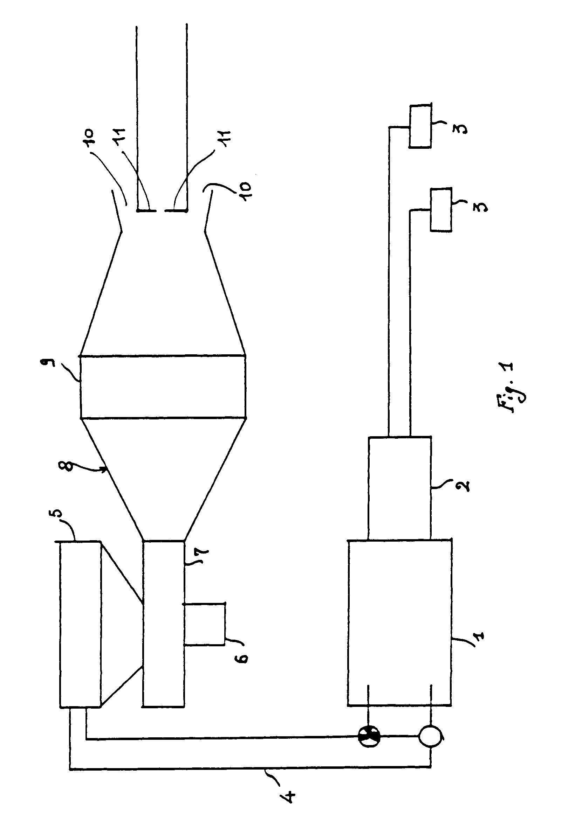

La description qui va suivre et qui ne présente aucun caractère limitatif, devra être lue en regard de la figure 1 annexée qui est un diagramme ou synoptique simplifié du fonctionnement d'un appareil de servitude selon la présente invention.

Un appareil de servitude, en particulier pour aéronef, comporte un châssis sensiblement rectangulaire qui repose sur quatre roues et comprend un timon d'attelage afin d'en permettre un déplacement aisé.

Sur le châssis sont disposés, selon la présente invention, un moteur thermique 1 et un alternateur 2 qui est entraîné par le moteur thermique 1 et fournit de l'énergie électrique à des prises 3. Le courant ainsi délivré a des spécificités correspondant aux normes des aéronefs ou des circuits à alimenter.

Le moteur thermique 1 est refroidi par un circuit de refroidissement 4 dans lequel circule un liquide tel que l'eau, celle-ci pouvant être additionnée notamment d'un corps anti-gel. Par exemple, ce liquide de refroidissement est de l'eau glycolée. Le circuit de refroidissement 4 comprend un échangeur de chaleur 5 qui est, selon cet exemple de réalisation, un radiateur derrière lequel est situé un ventilateur 6. Ainsi que cela est connu, le ventilateur 6, entraîné par un moteur électrique 7 aspire l'air ambiant au travers du radiateur 5 : le flux d'air ainsi créé se charge en calories en traversant ce radiateur 5.

Selon la présente invention, cet appareil de servitude comporte un conduit 8 dont une extrémité est située au niveau du ventilateur 6 afin que le flux d'air traversant le radiateur 5 soit chassé par le ventilateur 6 dans le conduit 8.

Ce conduit 8 comporte, dans le sens du déplacement du flux d'air indiqué par la flèche "F", successivement une chambre de chauffage 9 et des moyens pour orienter le flux d'air issu de celle-ci.

La chambre de chauffage 9 comprend des résistances électriques, par exemple au nombre de six et ayant chacune une puissance de 60 KW. Ces résistances électriques peuvent être mises en action séparément et sont alimentées en courant électrique à partir de celui fourni par l'alternateur 2. Par un système connu de l'homme du métier, et si nécessaire, la demande en énergie électrique aux prises 3 est prioritaire par rapport à celle provenant de la chambre de chauffage 9 .

A la sortie de la chambre de chauffage 9 sont disposés des moyens pour orienter le flux d'air issu de celle-ci qui sont constitués par au moins deux ouvertures 10 ménagées dans le conduit 8 et munies de volets 11. Ces volets 11 sont mobiles vers l'extérieur du conduit 8 . En les rabattant vers le conduit 8, on obture les ouvertures 13 : le flux d'air issu de la chambre de chauffage 13 est chassé dans le conduit 8 jusqu'à un aéronef. Par contre, en écartant les volets 11 du conduit 8 , on ouvre les ouvertures 10 permettant ainsi à ce flux d'air de s'échapper vers l'extérieur. On comprendra aisément qu'en ouvrant plus ou moins les volets 11 on permettra à une plus ou moins grande quantité du flux d'air issu de la chambre de chauffage 9 de s'échapper vers l'extérieur ou d'être dirigé jusqu'à un aéronef, et ce en fonction de la température souhaitée à l'intérieur de cet aéronef. Bien évidemment le conduit d'air 8 peut conduire le flux d'air à une autre destination qu'un aéronef.

Au-delà des moyens pour orienter le flux d'air, le conduit 8 est réalisé en un matériau souple de façon à constituer une manche facilement mamnipulable.

L'appareil de servitude selon la présente invention comprend donc, d'une part, un dispositif pour générer de l'énergie électrique et, d'autre part, un dispositif distributeur d'air qui utilise l'air réchauffé par le refroidissement du dispositif pour générer l'énergie électrique et chauffé par une partie de l'énergie électrique produite par celui-ci.

Ce dispositif distributeur d'air permet d'insuffler notamment dans un aéronef de l'air chauffé, d'une part par récupération de l'énergie thermique cédée par le circuit de refroidissement du moteur thermique, et, d'autre part, si nécessaire, par des moyens de chauffage alimentés en énergie par l'alternateur couplé au moteur thermique.

Il peut être avantageux dans certaines conditions de fournir de l'air froid et non de l'air chaud. Dans ce cas, le dispositif pour distribuer l'air devra comporter un climatiseur disposé entre la chambre de chauffage et les moyens pour orienter le flux d'air.

Bien évidemment, cet appareil de servitude comporte également un réservoir pour le carburant destiné à l'alimentation du moteur thermique 1 ainsi que des ensembles de commande et de sécurité bien connus de l'homme du métier et sans rapport avec la présente invention.

**Revendications**

1. Appareil de servitude,en particulier pour aéronef, comprenant notamment un moteur thermique (1) refroidi par un liquide de refroidissement, un alternateur (2) entraîné par ledit moteur (1) fournissant un courant électrique délivré à une ou plusieurs prises (3), lequel appareil est caractérisé par le fait que ledit moteur thermique (1) comporte un circuit de refroidissement (4) comprenant un échangeur de chaleur (5) entre ledit liquide de refroidissement et un flux d'air et que ledit appareil comporte, disposé sur le même châssis, un dispositif distributeur d'air comprenant un conduit (8) pour ledit flux d'air dont une extrémité est constituée par l'échangeur de chaleur (5) et comporte un ventilateur (6), et qui comprend une chambre (9) munie de moyens de chauffage précédant des moyens pour orienter le flux d'air issu de ladite chambre de chauffage (9).

2. Appareil selon la revendication 1, caractérisé par le fait que le ventilateur (6) est entraîné par un moteur électrique (7) alimenté en énergie à partir de l'alternateur (2).

3. Appareil selon l'une des revendications 1 ou 2, caractérisé par le fait que les moyens de chauffage prévus dans la chambre (9) sont constitués par des résistances électriques alimentées en énergie par l'alternateur (2).

4. Appareil selon la revendication 3, caractérisé par le fait que le circuit d'alimentation électrique des résistances de la chambre de chauffage (9) comporte un dispositif de contrôle afin que l'énergie électrique issue de l'alternateur (2) reste maximum aux prises (3).

5. Appareil selon l'une des revendications 1 à 4, caractérisé par le fait que le conduit (8) pour le flux d'air est en un matériau souple au-delà des moyens pour orienter le flux d'air issu de la chambre de chauffage (9).

6. Appareil selon l'une des revendications 1 à 5 caractérisé par le fait que les moyens pour orienter le flux d'air sont constitués par des volets (11) pouvant plus ou moins obturer des ouvertures (10) ménagées dans le conduit (8) et permettant ainsi de diriger le flux d'air en partie ou en totalité vers l'aéronef.

Fig. 1

**Office européen
des brevets**

# RAPPORT DE RECHERCHE
# EUROPEENNE

Numéro de la demande

## EP 90 40 1793

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WO-A-8 504 149 (JUNG) <br> * Abrégé * <br> – – – | 1 | B 64 F 1/34 <br> F 02 G 5/02 |
| A | GB-A-2 206 708 (COMBINED POWER SYSTEMS LTD) <br> * Fig.; abrégé; page 9, lignes 7-15 * <br> – – – | 1 | |
| A | DE-A-3 025 052 (RUMMEL) <br> * Revendication 1 * <br> – – – – – | 1 | |

**DOMAINES TECHNIQUES
RECHERCHES (Int. Cl.5)**

B 64 F
F 02 G

**Le présent rapport de recherche a été établi pour toutes les revendications**

| Lieu de la recherche | Date d'achèvement de la recherche | Examinateur |
|---|---|---|
| La Haye | 21 février 91 | VAN GESTEL H.M. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant